# EUROPÄISCHE PATENTSCHRIFT

(11) **EP 3 668 747 B1**
(45) Veröffentlichungstag und Bekanntmachung des Hinweises auf die Patenterteilung: **06.03.2024**
(21) Anmeldenummer: 18755806.9
(22) Anmeldetag: 15.08.2018
(51) Int. Cl.: B60L 58/10, B60L 3/12, H01M 10/42

(54) **VERFAHREN ZUM BETREIBEN EINES BATTERIEMANAGEMENTSYSTEMS, BATTERIEMANAGEMENTSYSTEM UND KRAFTFAHRZEUG**
METHOD FOR OPERATING A BATTERY MANAGEMENT SYSTEM, BATTERY MANAGEMENT SYSTEM AND MOTOR VEHICLE
PROCÉDÉ PERMETTANT DE FAIRE FONCTIONNER UN SYSTÈME DE GESTION DE BATTERIE, SYSTÈME DE GESTION DE BATTERIE ET VÉHICULE AUTOMOBILE

(30) Priorität: 18.08.2017 DE 102017118972
(43) Veröffentlichungstag der Anmeldung: 24.06.2020
(73) Patentinhaber: Volkswagen Aktiengesellschaft, 38440 Wolfsburg (DE)
(72) Erfinder: MÜNNING, Daniel, 38118 Braunschweig (DE); MANN, Andreas, 38533 Vordorf OT Rethen (DE)
(74) Vertreter: Bals & Vogel Patentanwälte PartGmbB
(86) Internationale Anmeldenummer: PCT/EP2018/072131
(87) Internationale Veröffentlichungsnummer: WO 2019/034695

(56) Entgegenhaltungen:
- DE-A1-102006 002 407
- DE-A1-102013 213 269
- DE-A1-102016 112 707
- US-A1- 2014 184 166
- US-A1- 2015 274 028

## Beschreibung

Die vorliegende Erfindung betrifft ein Verfahren zum Betreiben eines Batteriemanagementsystems eines Kraftfahrzeugs, insbesondere eines Elektrofahrzeugs oder eines Hybridfahrzeugs. Ferner betrifft die Erfindung ein Batteriemanagementsystem eines Kraftfahrzeugs zum Kontrollieren eines Betriebs einer Batterie des Kraftfahrzeugs sowie ein Kraftfahrzeug mit einem gattungsgemäßen Batteriemanagementsystem.

Es sind unterschiedliche Arten von Kraftfahrzeugen mit einem elektrischen Energiespeicher, insbesondere einer wiederaufladbaren Batterie, bekannt. Hierzu zählen beispielsweise Elektrofahrzeuge, Mikrohybridfahrzeuge, Mildhybridfahrzeuge, Vollhybridfahrzeuge und Plug-In-Hybridfahrzeuge. Während der Antrieb von Elektrofahrzeugen rein elektrisch erfolgt, weisen Hybridfahrzeuge mindestens einen Verbrennungsmotor zum Antrieb auf. Derartige Kraftfahrzeuge weisen ein Batteriemanagementsystem auf, welches zum Überwachen sowie zum Betreiben der Batterie ausgebildet ist.

Mikrohybridfahrzeuge stellen die einfachste Art der Hybridfahrzeuge dar. Sie unterscheiden sich von herkömmlichen Kraftfahrzeugen, welche für den Antrieb lediglich einen Verbrennungsmotor aufweisen, durch eine zusätzliche Elektromaschine, welche auch als Generator betreibbar ist, und über welche kinetische Energie, insbesondere Rotationsenergie der Antriebsachsen, in elektrische Energie umwandelbar ist. Eine solche Energierückgewinnung wird auch als Rekuperation bezeichnet. Bei Mikrohybridfahrzeugen ist die Elektromaschine für den Antrieb der Antriebsachsen nicht geeignet. Bei Mildhybridfahrzeugen ist die Elektromaschine neben der Rekuperation auch für die Lastpunktverschiebung des Verbrennungsmotors ausgebildet. Es gibt zwei Arten der Lastpunktverschiebung, die Lastpunktabsenkung und die Lastpunktanhebung. Bei der Lastpunktabsenkung wird die Elektromaschine als Elektromotor betrieben, um den Verbrennungsmotor beim Antreiben des Kraftfahrzeugs zu unterstützen. Das Abzweigen von Motordrehmomenten zum Antreiben der Elektromaschine zum Generieren von elektrischem Strom wird als Lastpunktanhebung bezeichnet. Vollhybridfahrzeuge zeichnen sich durch mindestens eine Elektromaschine aus, welche zum alleinigen Antreiben des Kraftfahrzeugs ausgebildet ist, ohne dass hierfür eine Unterstützung durch den Verbrennungsmotor erforderlich ist. Plug-In-Hybridfahrzeuge haben darüber hinaus den Vorteil, dass diese über eine Ladeschnittstelle zum Aufladen der Batterie mittels einer externen Stromquelle verfügen.

Elektro- und Hybridfahrzeuge können mit einer Vielzahl unterschiedlicher Betriebsmodi betrieben werden. Dabei ist nicht jeder dieser Fahrzeugtypen in der Lage, sämtliche Betriebsmodi zu realisieren. Beispiele für Betriebsmodi sind Rekuperation, rein elektrisches Fahren, Verbrennungsmotorisches Fahren mit Lastpunktverschiebung, Torque-Fill, Motor-Start, Stop-Betrieb, der Betrieb von Bordnetz-Verbrauchern, wie z.B. eines elektrischen Klimakompressors, oder dergleichen.

Rekuperation ist ein Betriebsmodus, welcher bei Elektro- und sämtlichen Hybridfahrzeugen anwendbar ist. Beim elektrischen Fahren wird der Vortrieb vollständig von der Elektromaschine bereitgestellt. Dieser Betriebsmodus ist von Elektrofahrzeugen, einigen Mild-Hybridfahrzeugen, Vollhybridfahrzeugen sowie Plug- In-Hybridfahrzeugen realisierbar. Mild-Hybridfahrzeuge, Vollhybridfahrzeuge sowie Plug-In-Hybridfahrzeuge sind für Verbrennungsmotorisches Verfahren mit Lastpunkverschiebung ausgebildet. Beim Torque-Fill wird beim Schalten des Getriebes des Verbrennungsmotors das Antriebsmoment kurzzeitig von der Elektromaschine bereitgestellt, um den Fahrkomfort beim Schaltvorgang zu verbessern. Dieser Betriebsmodus kann bei Mild-Hybridfahrzeugen, Vollhybridfahrzeugen sowie Plug-In-Hybridfahrzeugen zum Einsatz kommen, sofern mindestens eine Elektromaschine direkt mit einem Rad mechanisch gekoppelt ist. Beim Motor-Start wird der Verbrennungsmotor mittels der Elektromaschine oder eines Startergenerators gestartet. Beim Stop-Betrieb ist der Verbrennungsmotor abgeschaltet, wobei ggf. Nebenverbraucher weiterhin mit elektrischer Energie versorgt werden.

Diese unterschiedlichen Betriebsmodi haben alle gemeinsam, dass an der Batterie ein Strom fließt und diese somit einer Belastung ausgesetzt ist. Die Höhe der Belastung der Batterie ist dabei von Betriebsmodus zu Betriebsmodus unterschiedlich. Insbesondere beim Starten des Verbrennungsmotors und beim elektrischen Fahren bei höheren Geschwindigkeiten erfährt die Batterie für einen kurzen Zeitraum eine besonders hohe Belastung. Um einen sicheren Betrieb sowie eine möglichst hohe Lebensdauer der Batterie zu gewährleisten, muss sichergestellt werden, dass die Batterie nicht überlastet wird. Hierfür ist es bekannt, eine Batteriegrenze zu definieren, welche beim Betrieb der Batterie nach Möglichkeit nicht oder nur kurzfristig überschritten werden darf.

Gemäß der DE 10 2011 012 818 B4 wird vorgeschlagen, eine Batterie in Abhängigkeit einer mittleren Batteriebelastung zu betreiben. Zur Ermittlung der mittleren Batteriebelastung wird die Summe quadrierter Batterieströme gebildet, durch die Anzahl der Abtastungen geteilt und aus diesem Wert die Wurzel gezogen. Ein Quadrieren hat den Vorteil, dass auf diese Weise höhere Ströme, welche eine besonders große Belastung für die Batterie darstellen, stärker als schwächere Ströme gewichtet werden. Aus der DE 10 2014 210 197 A1 ist bekannt, die Batteriebelastung über ein entsprechendes Integral quadrierter Batteriestromstärken zu ermitteln. Die DE10 2013 213 269 A1 schlägt die Festlegung von Grenzwerten für die Höhe der quadrierten Batteriestromstärke vor, um einen Zustand zu vermeiden, in dem keine Stromabgabe der Batterie mehr möglich ist. Aus den US 2014/0184166 A1,

US 2015/0274028 A1, DE 10 2016 112707 A1, DE 10 2006 002 047 A1 und

DE 10 2013 213269 A1 sind verschiedene Verfahren zum Betreiben von Batteriesystemen bekannt.

Bekannte Verfahren zum Betreiben eines Batteriemanagementsystems eines Kraftfahrzeugs haben allesamt den Nachteil, dass hohe Batterieströme zu einer Ermittlung einer Batteriestrombelastung führen, aufgrund welcher ein übermäßig restriktives Betreiben der Batterie veranlasst wird. Dies führt häufig dazu, dass elektrische Funktionen des Kraftfahrzeugs unnötig eingeschränkt werden und dem Fahrer zumindest vorübergehend nicht zur Verfügung stehen. Dies kann sich negativ auf das Fahrerlebnis, insbesondere einen Fahrkomfort, des Fahrers auswirken.

Es ist daher die Aufgabe der vorliegenden Erfindung, ein Verfahren zum Betreiben eines Batteriemanagementsystems eines Kraftfahrzeugs, ein Batteriemanagementsystem für ein Kraftfahrzeug sowie ein Kraftfahrzeug bereitzustellen, welche die Nachteile des Stands der Technik beheben oder zumindest teilweise beheben bzw. verbessern. Es ist insbesondere die Aufgabe der vorliegenden Erfindung, ein Verfahren zum Betreiben eines Batteriemanagementsystems eines Kraftfahrzeugs, ein Batteriemanagementsystem für ein Kraftfahrzeug sowie ein Kraftfahrzeug zu schaffen, welche auf eine einfache und kostengünstige Weise eine verbesserte Verfügbarkeit elektrischer Funktionen des Kraftfahrzeugs bereitstellen und dabei eine hohe Lebensdauer der Batterie gewährleisten.

Die voranstehende Aufgabe wird durch die Patentansprüche gelöst. Demnach wird die Aufgabe durch ein Verfahren zum Betreiben eines Batteriemanagementsystems eines Kraftfahrzeugs gemäß dem unabhängigen Anspruch 1, ein Batteriemanagementsystem für ein Kraftfahrzeug gemäß dem unabhängigen Anspruch 8 sowie ein Kraftfahrzeug gemäß dem unabhängigen Anspruch 9 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren zum Betreiben eines Batteriemanagementsystems eines Kraftfahrzeugs beschrieben sind, selbstverständlich auch im Zusammenhang mit dem erfindungsgemäßen Batteriemanagementsystem sowie dem erfindungsgemäßen Kraftfahrzeug und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch ein Verfahren zum Betreiben eines Batteriemanagementsystems eines Kraftfahrzeugs mit einer Batterie, einer Elektromaschine sowie einer Kontrolleinheit gelöst. Das Verfahren weist die folgenden Schritte auf:
- Erstellen einer Prädiktion einer potenziellen Batteriestrombelastung der Batterie mittels der Kontrollei n heit,
- Bestimmen einer adaptiven Batteriestromgrenze der Batterie mittels der Kontrolleinheit, wobei die adaptive Batteriestromgrenze auf Basis der erstellten Prädiktion der potenziellen Batteriestrombelastung bestimmt wird, wobei die adaptive Batteriestromgrenze als Integralfunktion der Zeit bestimmt wird, wobei für einen Startzeitpunkt ein Wert gewählt wird, welcher größer als Null ist,
- Ermitteln einer aktuellen Batteriestrombelastung der Batterie mittels der Kontrolleinheit, wobei die aktuelle Batteriestrombelastung durch Messen eines Batteriestroms sowie als Integralfunktion der Zeit ermittelt wird,
- Generieren eines Batteriebelastungsindikationswerts durch Vergleichen der Batteriestrombelastung mit der adaptiven Batteriestromgrenze mittels der Kontrolleinheit,
- Einschränken mindestens einer elektrischen Funktion des Kraftfahrzeugs mittels der Kontrolleinheit, wenn der Batteriebelastungsindikationswert einen vorbestimmten Belastungstoleranzwert übersteigt,
wobei für eine Mehrzahl von elektrischen Funktionen des Kraftfahrzeugs eine Einschränkungsgewichtung bereitgestellt wird, wobei das Einschränken der mindestens einen elektrischen Funktion In Abhängigkeit der Einschränkungsgewichtung erfolgt.

Ein Batteriemanagementsystem ist im Rahmen der Erfindung ein System eines Kraftfahrzeugs zum Freigeben sowie Blockieren einer Stromabgabe und/oder einer Stromaufnahme der Batterie bzw. ggf. mehrere Batterien. Das Batteriemanagementsystem weist hierfür eine Kontrolleinheit auf. Mittels eines Batteriemanagementsystems ist eine übermäßige Batteriebelastung der Batterie durch situationsabhängiges Reduzieren von Batterieströmen verhinderbar und somit eine Lebensdauer der Batterie verlängerbar. Die Batterie ist zum Aufnehmen bzw. Speichern sowie zum Abgeben von elektrischem Strom ausgebildet.

Die Elektromaschine ist vorzugsweise ausgebildet, als Generator betrieben zu werden und elektrischen Strom zu generieren. Somit ist die Elektromaschine zum Rekuperieren verwendbar, um Rotationsenergie des Antriebsstrangs des Kraftfahrzeugs, wie z.B. Rotationsenergie der angetriebenen Räder, bei einem Brems- bzw. Verzögerungsvorgang in elektrische Energie umzuwandeln. Vorzugsweise ist die Elektromaschine ausgebildet, als Elektromotor betrieben zu werden und elektrischen Strom in Rotationsenergie umzuwandeln.

Somit ist die Elektromaschine zum Erzeugen eines Antriebsmoments verwendbar. Dabei ist es bevorzugt, dass die Elektromaschine zur Lastpunktabsenkung eines Verbrennungsmotors des Kraftfahrzeugs ausgebildet ist. Weiter bevorzugt ist die Elektromaschine ausgebildet, ein derartiges Antriebsmoment zu erzeugen, mittels welchem ein selbständiges Fahren des Kraftfahrzeugs ohne ein zusätzliches Antriebsmoment des Verbrennungsmotors möglich ist. Das Erstellen der Prädiktion der potenziellen Batteriebelastung der Batterie erfolgt mittels der Kontrolleinheit. Eine Prädiktion der potenziellen Batteriebelastung gibt demnach eine Batteriebelastung wieder, welche beim Betreiben des Kraftfahrzeugs zu erwarten ist. Einer solchen Prädiktion können beispielsweise regionale Faktoren, wie z.B. Infrastruktur, Klima bzw. Wetter, Topologie, Verkehrslage und/oder dergleichen, zugrunde gelegt werden. Ferner kann die Prädiktion in Abhängigkeit des Fahrzeugtyps erstellt werden. Es kann erfindungsgemäß vorgesehen sein, dass beim Erstellen der Prädiktion eine vorgespeicherte Prädiktion aus einer Speichereinheit ausgelesen wird. Diese vorgespeicherte Prädiktion kann unverändert oder anschließend modifiziert werden. Ggf. kann vorgesehen sein, dass die modifizierte Prädiktion in der Speichereinheit abgelegt wird, insbesondere dass die vorgespeicherte Prädiktion durch die modifizierte Prädiktion überschrieben wird. Es ist bevorzugt, dass das Erstellen der Prädiktion fortlaufend bzw. zumindest mehrfach während des Betriebs des Kraftfahrzeugs erfolgt, um stets eine aktuelle bzw. realitätsnahe Prädiktion zum Bestimmen der adaptiven Batteriestromgrenze zur Verfügung zu stellen.

Das Bestimmen der adaptiven Batteriestromgrenze der Batterie erfolgt mittels der Kontrolleinheit. Hierfür wird die zuvor erstellte Prädiktion der potenziellen Batteriestrombelastung zugrunde gelegt. Die adaptive Batteriestromgrenze wird erfindungsgemäß als Funktion der Zeit und weiter als Integralfunktion bestimmt, so dass der Wert der adaptiven Batteriestromgrenze mit fortschreitender Zeit nicht abnehmen kann. Bei der Bestimmung der adaptiven Batteriestromgrenze wird erfindungsgemäß für einen Startzeitpunkt, wie z.B. das Starten eines Verbrennungsmotors des Kraftfahrzeugs oder das Anfahren aus dem Stand, insbesondere bei Bergauffahrt, ein Wert gewählt, welcher größer als Null ist, da derartige Betriebsmodi eine besonders hohe Batteriebelastung bewirken und somit ein unnötiges Einschränken von elektrischen Funktionen des Kraftfahrzeugs vermeidbar ist. Es ist bevorzugt, dass das Bestimmen der adaptiven Batteriestromgrenze fortlaufend bzw. zumindest mehrfach während des Betriebs des Kraftfahrzeugs erfolgt, um stets eine aktuelle bzw. realitätsnahe adaptive Batteriestromgrenze zur Verfügung zu stellen.

Die aktuelle Batteriestrombelastung wird mittels der Kontrolleinheit ermittelt. Im Idealfall entspricht die aktuelle Batteriestrombelastung der Prädiktion. Die Ermittlung der aktuellen J Batteriestrombelastung erfolgt erfindungsgemäß durch Messen des Batteriestroms und beispielsweise zusätzlich durch Berechnung auf Basis einer Ansteuerung von elektrisch betreibbaren Komponenten des Kraftfahrzeugs, welche mit der Batterie elektrisch gekoppelt sind, durch die Kontrolleinheit. Die aktuelle Batteriestrombelastung wird erfindungsgemäß als Funktion der Zeit und weiter als Integralfunktion ermittelt, so dass der Wert der aktueller Batteriestrombelastung mit fortschreitender Zeit nicht abnehmen kann. Es ist bevorzugt, dass das Ermitteln der aktuellen Batteriestrombelastung fortlaufend bzw. zumindest mehrfach während des Betriebs des Kraftfahrzeugs erfolgt, um für das Betreiben des Batteriemanagementsystems stets eine aktuelle bzw. realitätsnahe Batteriestrombelastung zu verwenden.

Der Batteriebelastungsindikationswert wird von der Kontrolleinheit durch Vergleichen der aktuellen Batteriestrombelastung mit der adaptiven Batteriestromgrenze generiert. Hierbei sind unterschiedliche Fälle zu unterscheiden. In einem ersten Fall ist die aktuelle Batteriestrombelastung höher als die adaptive Batteriestromgrenze. In diesem ersten Fall wird ein kontinuierlich wachsender Batteriebelastungsindikationswert generiert. In einem zweiten Fall entspricht die aktuelle Batteriebelastung der adaptiven Batteriestromgrenze. In diesem zweiten Fall bleibt der Batteriebelastungsindikationswert konstant. In einem dritten Fall ist die adaptive Batteriestromgrenze größer als die aktuelle Batteriebelastung. Dies hat zur Folge, dass der Batteriebelastungsindikationswert wieder abnimmt. Der Batteriebelastungsindikationswert ist dabei vorzugsweise derart definiert, dass dieser nicht negativ werden kann. Dies hat den Grund, dass ausgehend von einem negativen Batteriebelastungsindikationswert und einer aktuellen Batteriebelastung, welche höher als die adaptive Batteriestromgrenze ist, der Batteriebelastungsindikationswert über einen noch längeren Zeitraum ansteigen könnte, bis dieser den Belastungstoleranzwert übersteigt. Ein solcher Puffer würde somit eine übermäßige Beanspruchung der Batterie ermöglichen und könnte auf diese Weise zu einer Beschädigung dieser führen.

Der Batteriebelastungsindikationswert kann beispielsweise als Differenz eines Integrals der aktuellen Batteriestrombelastung und eines Integrals der adaptiven Batteriestromgrenze über einen Betrachtungszeitraum bestimmt werden. Folgendes Szenario ist ausgehend von einen Batteriebelastungsindikationswert, welcher zu einem Initialzeitpunkt null entspricht, möglich. Wenn die aktuelle Batteriestrombelastung ab dem Initialzeitpunkt niedriger oder gleich der Batteriestromgrenze ist, erfolgt vorzugsweise kein Einschränken von elektrischen Funktionen des Kraftfahrzeugs, da die Batterie in diesem Fall nicht übermäßig belastet wird. Wenn anschließend die aktuelle Batteriebelastung die adaptive Batteriestromgrenze übersteigt, wächst der Belastungsindikationswert. Unterschreitet die aktuelle Batteriebelastung die adaptive Batteriestromgrenze wieder, nimmt auch der Belastungsindikationswert wieder ab und kann maximal auf null fallen. Wenn die aktuelle Batteriebelastung die adaptive Batteriestromgrenze übersteigt und der Belastungsindikationswert den vorbestimmten Belastungstoleranzwert erreicht bzw. übersteigt, droht eine Überlastung der Batterie, so dass erfindungsgemäß in diesem Fall mindestens eine elektrische Funktion des Kraftfahrzeugs mittels der Kontrolleinheit eingeschränkt wird. Unter Einschränken wird erfindungsgemäß beispielsweise ein komplettes deaktivieren oder ein teilweises Einschränken verstanden. Wenn beispielsweise die elektrische Fahrt teilweise eingeschränkt wird, steht hierfür nur ein Teil der Leistung der Elektromaschine zur Verfügung. Das Einschränken erfolgt vorzugsweise nur solange, bis der Batteriebelastungsindikationswert einen Reaktivierungsgrenzwert erreicht bzw. unterschreitet. Der Reaktivierungsgrenzwert ist vorzugsweise kleiner oder gleich dem Belastungstoleranzwert. Das Verfahren wird vorzugsweise derart durchgeführt, dass eingeschränkte elektrische Funktionen möglichst kurzzeitig eingeschränkt bleiben, um eine hohe Verfügbarkeit der elektrischen Funktionen zu gewährleisten, ohne dabei die Lebensdauer der Batterie durch eine übermäßige Belastung der Batterie unnötig zu verringern.

Die Einschränkungsgewichtung spiegelt eine Wichtigkeit der einzelnen elektrischen Funktionen wider. Die Reihenfolge kann beispielsweise vom Hersteller des Batteriemanagementsystems bzw. des Kraftfahrzeugs vordefiniert werden. Eine hohe Einschränkungsgewichtung bedeutet beispielsweise, dass dieser elektrischen Funktion eine hohe Wichtigkeit beigemessen wird, eine niedrigere Einschränkungsgewichtung bedeutet eine geringere Wichtigkeit. Vorzugsweise wird dem Starten des Verbrennungsmotors - sofern vom Fahrzeugtyp ermöglicht - die höchste Einschränkungsgewichtung zugeordnet, da bei Einschränkung dieser Funktion ein Fahren des Kraftfahrzeugs mit Verbrennungsmotor nicht möglich wäre. Eine geringere Einschränkungsgewichtung wird vorzugsweise der Rekuperation zugeordnet, da mittels Rekuperation die Batterie geladen und somit ein energiesparendes Fahren verbessert wird. Dem elektrischen Fahren - sofern vom Fahrzeugtyp ermöglicht - wird vorzugsweise eine noch geringere Einschränkungsgewichtung zugeteilt, da hierdurch ein hoher Fahrkomfort sowie ein geringer Energieverbrauch, insbesondere in Städten bzw. bei Stop and Go Fahrten, gewährleistet wird. Verbrennungsmotorisches Fahren mit Lastpunktverschiebung - sofern vom Fahrzeugtyp ermöglicht - wird vorzugsweise eine weiter geringere Einschränkungsgewichtung zugeteilt, wobei der Lastpunktanhebung vorzugsweise eine höhere Einschränkungsgewichtung als der Lastpunktabsenkung zugeordnet wird, da die Lastpunktanhebung zum Laden der Batterie wichtig sein kann, während die Lastpunktabsenkung in erster Linie einen Komfortgewinn beim Fahren des Kraftfahrzeugs bietet. Dem Torque-Fill Fahrmodus wird vorzugsweise eine noch geringere Einschränkungsgewichtung zugeordnet, da dieser Fahrmodus in erster Linie einen Komfortgewinn beim Fahren des Kraftfahrzeugs bietet. Dem Betrieb eines Klimakompressors, wie z.B. eines 48V Klimakompressors, wird vorzugsweise eine geringere Einschränkungsgewichtung zugeteilt, da es sich bei einem solchen Klimakompressor im Wesentlichen um einen Komfortverbraucher handelt, welcher für den Fahrbetrieb, zumindest beim Fahren in gemäßigten Klimazonen, nur eine geringe Bedeutung haben kann. Zum Verhindern von beschlagenen Scheiben bei feuchter Witterung oder wenn das Kraftfahrzeug für das Fahren in wärmeren Klimazonen vorgesehen ist, kann die Einschränkungsgewichtung des Betriebs des Klimakompressors vorzugsweise erhöht werden, beispielsweise zwischen Lastpunktabsenkung und Lastpunktanhebung oder zwischen Lastpunktanhebung und elektrischem Fahren. Vorzugsweise werden mehrere elektrische Funktionen in Abhängigkeit der Einschränkungsgewichtung eingeschränkt, wobei das Einschränken beispielsweise simultan, phasenverschoben parallel oder zeitversetzt hintereinander erfolgen kann.

Ein erfindungsgemäßes Verfahren zum Betreiben eines Batteriemanagementsystems eines Kraftfahrzeugs mit einer Batterie hat gegenüber herkömmlichen Verfahren den Vorteil, dass mit einfachen Mitteln sowie auf eine kostengünstige Art und Weise aufgrund einer realitätsnahen adaptiven Batteriestromgrenze eine Verfügbarkeit elektrischer Funktionen des Kraftfahrzeugs verbessert und eine hohe Lebensdauer der Batterie weiterhin gewährleistet ist. Durch die prädiktive Bestimmung der adaptiven Batteriestromgrenze wird ermöglicht, dass elektrische Funktionen zu einem frühen Betriebszeitpunkt eingeschränkt werden, damit zu einem späteren Betriebszeitpunkt bestimmte elektrische Funktionen bereitstellbar sind. Eine Einschränkungsgewichtung hat den Vorteil, dass elektrische Funktionen hierdurch nach ihrer Wichtigkeit für den Fahrbetrieb des Kraftfahrzeugs einteilbar und entsprechend einschränkbar sind, so dass zunächst die unwichtigen elektrischen Funktionen und dann - je nach Bedarf - die wichtigeren elektrischen Funktionen entsprechend ihrer Wichtigkeit zum Schonen der Batterie eingeschränkt werden können.

Gemäß einer bevorzugten Weiterbildung der Erfindung kann vorgesehen sein, dass das Erstellen der Prädiktion der potenziellen Batteriestrombelastung auf Basis von gewählten Fahrrouten eines Navigationssystems und/oder auf Basis von Fahrrouten einer Streckenhistorie des Kraftfahrzeugs erfolgt. Gewählte Fahrrouten sind beispielsweise dann verfügbar, wenn in das Navigationssystem mindestens ein Zielort eingegeben und die zu fahrende Route bestimmt ist. Aus den Fahrrouten der Streckenhistorie des Fahrers kann eine vermutlich zu fahrende Strecke des Kraftfahrzeugs abgeschätzt werden. Dabei sind Fahrrouten der Streckenhistorie bevorzugt, welche regelmäßig gefahren werden. Dies ist insbesondere bei Berufspendlern auf einfache Weise durchführbar, insbesondere wenn der Fahrer stets dieselbe Route fährt. Auf diese Weise sind fahrroutenspezifische Streckendaten, wie z.B. Fahrbahnart, Gefälle, Verkehrsregelungen und dergleichen bekannt. Ergibt sich beispielsweise aus diesen Streckendaten, dass in einem späteren Fahrtabschnitt ein "Stop and Go" Fahren zu erwarten ist, z.B. beim Fahren durch eine Stadt, kann dieses derart interpretiert werden, dass ein relativ hoher Anteil an Elektrofahrt oder zumindest ein Fahren mit Lastpunktabsenkung zu erwarten ist. Daher wird die adaptive Batteriestromgrenze vorzugsweise vor diesem Fahrtabschnitt eine geringere Steigung aufweisen und somit einen schonenderen Betrieb der Batterie bewirken, um Batteriereserven für diesen Fahrtabschnitt bereitzustellen. Somit ist eine verbesserte Prädiktion der potenziellen Batteriestrombelastung möglich.

Vorzugsweise wird zum Erstellen der Prädiktion ein Fahrerprofil eines aktuellen Fahrers des Kraftfahrzeugs berücksichtigt. Das Fahrerprofil kann beispielsweise im Speicher des Kraftfahrzeugs, einem Fahrzeugschlüssel und/oder einer Cloud abgespeichert werden. Eine Aktivierung des Fahrerprofils kann beispielsweise manuell oder über individuell codierte Fahrzeugschlüssel, eine ID-Karte, Fingerabdrücke oder dergleichen erfolgen. Erfindungsgemäß kann vorgesehen sein, dass das aktuelle Fahrerprofil aus einer Mehrzahl unterschiedlicher Fahrerprofile herausgefiltert wird, wobei in dem Fahrerprofil die Streckenhistorie des jeweiligen Fahrers abgespeichert ist. Somit können Streckenhistorien des Kraftfahrzeugs unterschiedlichen Fahrerprofilen zugeordnet werden, so dass für die jeweiligen Fahrer unterschiedliche bzw. individualisierte Prädiktionen erstellbar sind. Das Fahrerprofil kann auch weitere Informationen des Fahrers, wie z.B. Fahrstil, persönliche Einstellungen und dergleichen, aufweisen, welche bei der Erstellung der Prädiktion vorzugsweise berücksichtigt werden. Dies hat den Vorteil, dass auf Basis dieser Informationen für die Fahrer verbesserte individualisierte Prädiktionen erstellbar sind.

Es kann erfindungsgemäß vorgesehen sein, dass beim Bestimmen der adaptiven Batteriestromgrenze eine vom Fahrer gewählte Batteriebeanspruchungsvorgabe berücksichtigt wird. Die Batteriebeanspruchungsvorgabe kann beispielsweise manuell vom Fahrer eingegeben und/oder im Fahrerprofil abgespeichert bzw. aus diesem ausgelesen werden. Eine Batteriebeanspruchungsvorgabe kann beispielsweise ein Maß dafür sein, wieviel Wert der Fahrer auf eine wirtschaftlich optimierte Nutzung der Batterie oder auf reines elektrisches Fahren legt. Legt der Fahrer z.B. großen Wert auf elektrisches Fahren oder sonstige elektrische Funktionen, welche einen hohen Strombedarf aufweisen, kann die adaptive Batteriestromgrenze einen steileren Verlauf aufweisen. Eine Lebensdauer der Batterie kann hierdurch negativ beeinträchtigt werden. Für den Fall, dass der Fahrer besonderen Wert auf eine wirtschaftlich optimierte Nutzung des Kraftfahrzeugs legt, wird die adaptive Batteriestromgrenze derart gewählt, dass diese einen flacheren Verlauf aufweist. Die Lebensdauer der Batterie kann hierdurch verlängert werden. Mit anderen Worten kann sich der Fahrer für eine höhere Batterielebensdauer bei geringerer Leistung oder eine geringere Batterielebensdauer bei höherer Leistung entscheiden. Die Verwendung einer Batteriebeanspruchungsvorgabe hat den Vorteil, dass der Fahrer selbst entscheiden kann, wie wichtig ihm das Nutzen elektrischer Funktionen des Kraftfahrzeugs ist oder ob ihm eine schonende Verwendung der Batterie wichtiger ist.

Vorzugsweise wird die Batteriestrombelastung über ein Integral des Quadrats einer ermittelten Batteriestromstärke ermittelt. Vorzugsweise wird die adaptive Batteriestromgrenze analog hierzu über ein Integral des Quadrats eines vorhergesagten Batteriestroms bestimmt. Die quadrierte Batteriestromstärke hat den Vorteil, dass der Wert stets größer als Null ist und dass höhere Batterieströme eine größere Gewichtung als geringere Batterieströme aufweisen, da diese auch zu einer überproportionalen Batteriebelastung führen. Durch das Integral werden die quadrierten Batterieströme über ein Zeitintervall addiert, so dass hieraus eine fortschreitende Batteriebelastung ableitbar ist.

Weiter bevorzugt wird die Einschränkungsgewichtung unter Berücksichtigung von fahrerspezifischen Präferenzen erstellt. Diese Präferenzen kann der Fahrer beispielsweise manuell eingeben. Ein Beispiel für eine solche Präferenz kann sein, dass dem Fahrer Torque-Fill wichtiger als Lastpunktabsenkung ist und die Einschränkungsgewichtung für Torque-Fill somit höher als die Einschränkungsgewichtung für Lastpunktabsenkung gewählt wird. Eine weitere Präferenz kann beispielsweise sein, dass dem Fahrer Klimafunktionen besonders wichtig oder unwichtig sind und diesen somit eine besonders hohe bzw. niedrige Einschränkungsgewichtung zugeordnet wird.

Gemäß einer bevorzugten Weiterbildung der Erfindung kann vorgesehen sein, dass mindestens zwei elektrische Funktionen des Kraftfahrzeugs mittels der Kontrolleinheit zumindest teilweise eingeschränkt werden, wenn der Batteriebelastungsindikationswert den vorbestimmten Belastungstoleranzwert übersteigt. Das Einschränken kann beispielsweise gleichzeitig, versetzt gleichzeitig oder hintereinander erfolgen. Eine Teileinschränkung hat den Vorteil, dass die jeweilige elektrische Funktion weiterhin verfügbar ist, gleichwohl nur mit einer geringeren Leistung. Auf diese Weise soll verhindert werden, dass einzelne elektrische Funktionen des Kraftfahrzeugs eine für den Fahrer zu geringe Verfügbarkeit aufweisen. Erfindungsgemäß wird somit sichergestellt, dass die elektrischen Funktionen des Kraftfahrzeugs möglichst allesamt eine breite Verfügbarkeit aufweisen.

Gemäß einem zweiten Aspekt der Erfindung wird die Aufgabe durch ein Batteriemanagementsystem für ein Kraftfahrzeug zum Kontrollieren eines Betriebs einer Batterie des Kraftfahrzeugs gelöst. Das Batteriemanagementsystem weist eine Kontrolleinheit auf und ist zur Durchführung des erfindungsgemäßen Verfahrens ausgebildet. Das Batteriemanagementsystem weist sämtliche Vorteile auf, die bereits zu dem Verfahren zum Betreiben eines Batteriemanagementsystems eines Kraftfahrzeugs gemäß dem ersten Aspekt der Erfindung beschrieben worden sind. Demnach hat das erfindungsgemäße Batteriemanagementsystems den Vorteil, dass mit einfachen Mitteln sowie auf eine kostengünstige Art und Weise aufgrund einer realitätsnahen adaptiven Batteriestromgrenze eine Verfügbarkeit elektrischer Funktionen des Kraftfahrzeugs verbessert und eine hohe Lebensdauer der Batterie weiterhin gewährleistet ist.

Gemäß einem dritten Aspekt der Erfindung wird die Aufgabe durch ein Kraftfahrzeug gelöst. Das Kraftfahrzeug weist eine Batterie, eine Elektromaschine sowie ein erfindungsgemäßes Batteriemanagementsystem auf. Die Elektromaschine ist vorzugsweise zum Generieren von elektrischem Strom sowie zum Bereitstellen eines Antriebsdrehmoments ausgebildet. Das erfindungsgemäße Kraftfahrzeug weist sämtliche Vorteile auf, die bereits zu dem Verfahren zum Betreiben eines Batteriemanagementsystems eines Kraftfahrzeugs gemäß dem ersten Aspekt der Erfindung beschrieben worden sind. Demnach hat das erfindungsgemäße Kraftfahrzeug den Vorteil, dass mit einfachen Mitteln sowie auf eine kostengünstige Art und Weise aufgrund einer realitätsnahen adaptiven Batteriestromgrenze eine Verfügbarkeit elektrischer Funktionen des Kraftfahrzeugs verbessert und eine hohe Lebensdauer der Batterie weiterhin gewährleistet ist.

Ein erfindungsgemäßes Verfahren, ein erfindungsgemäßes Batteriemanagementsystem sowie ein erfindungsgemäßes Kraftfahrzeug werden nachfolgend anhand von Zeichnungen näher erläutert. Es zeigen jeweils schematisch:
- Figur 1: in einem Ablaufdiagramm eine bevorzugte Ausführungsform des erfindungsgemäßen Verfahrens,
- Figur 2: in einem Diagramm einzelne Batteriestrombelastungen verschiedener elektrischer Funktionen in Abhängigkeit der Zeit,
- Figur 3: in einem Diagramm eine herkömmliche Batteriestromgrenze mit konstantem I_{RMS} und eine adaptive Batteriestromgrenze in Abhängigkeit der Zeit,
- Figur 4: in einem Diagramm einen Verlauf des erfindungsgemäßen Verfahrens,
- Figur 5: in einem Diagramm einen Toleranzbereich, und
- Figur 6: in einer Seitenansicht ein erfindungsgemäßes Kraftfahrzeug.

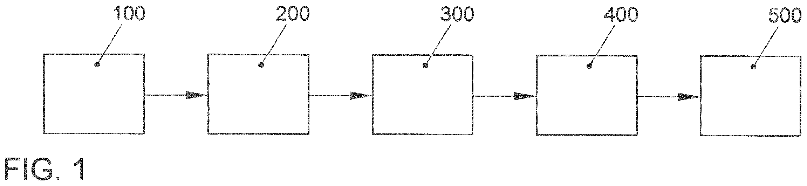

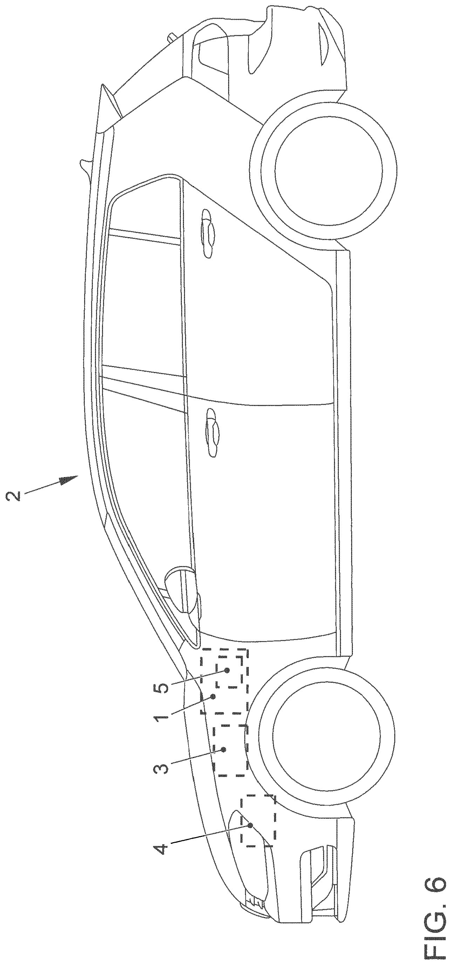

Elemente mit gleicher Funktion und Wirkungsweise sind in den Fig. 1 und 6 jeweils mit denselben Bezugszeichen versehen.

In Fig. 1 ist eine bevorzugte Ausführungsform des erfindungsgemäßen Verfahrens in einem Ablaufdiagramm schematisch dargestellt. In einem ersten Verfahrensschritt 100 wird eine Prädiktion einer potenziellen Batteriestrombelastung B einer Batterie 3 eines Kraftfahrzeugs 2 mittels einer Kontrolleinheit 5 eines erfindungsgemäßen Batteriemanagementsystems 1 erstellt. In einem zweiten Verfahrensschritt 200 wird eine adaptive Batteriestromgrenze A der Batterie 3 mittels der Kontrolleinheit 5 bestimmt. Die adaptive Batteriestromgrenze A wird auf Basis der erstellten Prädiktion der potenziellen Batteriestrombelastung B bestimmt. In einem dritten Verfahrensschritt 300 wird eine aktuelle Batteriestrombelastung B der Batterie 3 mittels der Kontrolleinheit 5 ermittelt. In einem vierten Verfahrensschritt 400 wird ein Batteriebelastungsindikationswert von der Kontrolleinheit 5 durch Vergleichen der Batteriestrombelastung B mit der adaptiven Batteriestromgrenze A generiert. Dabei bewirkt eine größere Batteriestrombelastung B als die adaptive Batteriestromgrenze A einen Zuwachs des Batteriebelastungsindikationswerts und eine geringere Batteriestrombelastung B als die adaptive Batteriestromgrenze A eine Abnahme des Batteriebelastungsindikationswerts, wobei der Batteriebelastungsindikationswert nach unten hin vorzugsweise begrenzt wird. Somit weist der Batteriebelastungsindikationswert beispielsweise einen Minimalwert von null auf und kann somit keinen negativen Wert annehmen. Wenn der Batteriebelastungsindikationswert einen vorbestimmten Belastungstoleranzwert übersteigt, wird in einem fünften Verfahrensschritt 500 mindestens eine elektrische Funktion des Kraftfahrzeugs 2 mittels der Kontrolleinheit 5 eingeschränkt.

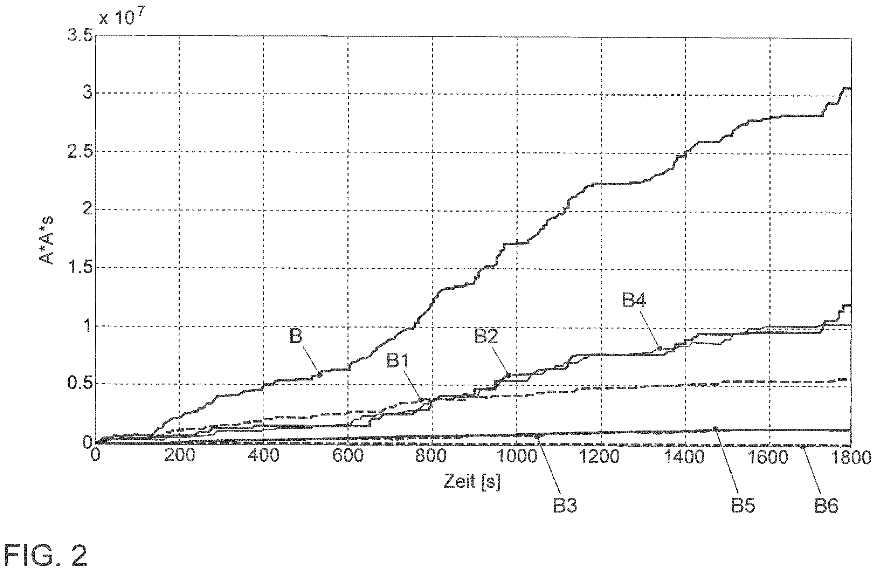

Fig. 2 zeigt exemplarisch einzelne Batteriestrombelastungen B, B1, B2, B3, B4, B5, B6 für verschiedene elektrische Funktionen des Kraftfahrzeugs in Abhängigkeit der Zeit. Das Kraftfahrzeug ist in diesem Beispiel als Hybridfahrzeug mit zwei Elektromaschinen ausgebildet. Einen besonders flachen Verlauf weist die Batteriestrombelastung Stillstand B6 auf, welche den Stillstand des Kraftfahrzeugs 2 betrifft, da in diesem Zustand kaum Batteriestrom fließt und die Batterie 2 somit kaum belastet wird. Darüber liegen die Batteriestrombelastung Lastpunktanhebung B3 und die Batteriestrombelastung Motorstart B5, da diese elektrischen Funktionen nur in relativ kurzen Zeitintervallen verwendet werden. Die Batteriestrombelastung Rekuperation B2 und die Batteriestrombelastung Torque-Fill B4 weisen einen etwas steileren Verlauf auf. Die Batteriestrombelastung E-Fahrt B1 weist zunächst einen steileren verlauf als die Batteriestrombelastung Rekuperation B2 und die Batteriestrombelastung Torque-Fill B4 und anschließend einen flacheren Verlauf auf. Hieraus kann geschlossen werden, dass das Kraftfahrzeug zunächst verstärkt elektromotorisch, beispielsweise bei relativ geringen Geschwindigkeiten, und anschließend verstärkt durch den Verbrennungsmotor, beispielsweise bei relativ hohen Geschwindigkeiten, angetrieben wird. Die Summe der einzelnen Batteriestrombelastungen B1, B2, B3, B4, B5, B6 ist in der Kurve der gesamten Batteriestrombelastung B dargestellt.

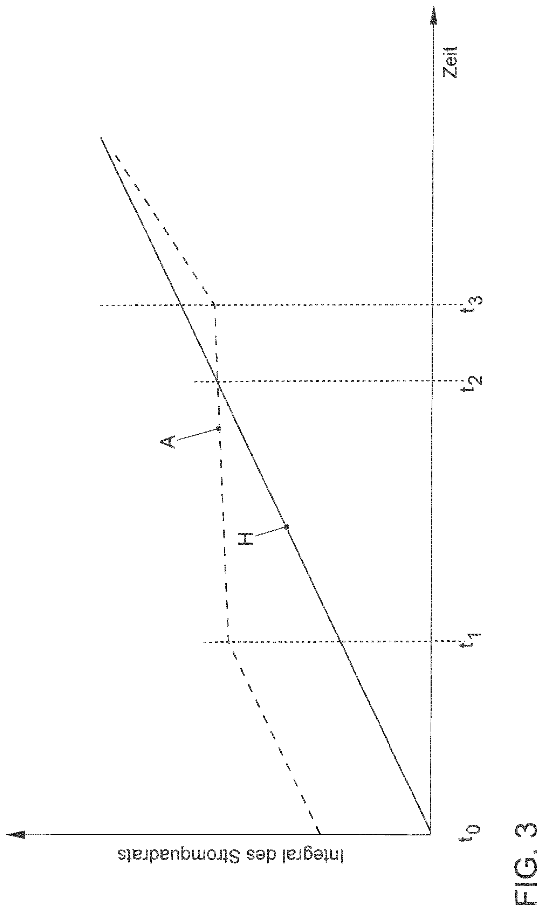

In Fig. 3 ist eine herkömmliche Batteriestromgrenze H mit konstantem I_{RMS} und einer adaptiven Batteriestromgrenze A in Abhängigkeit der Zeit in einem Diagramm abgebildet. I_{RMS} ist eine konventionelle Kenngröße zur Bestimmung einer Batteriebelastung und wird als Wurzel eines über die Fahrtzeit gemittelten quadratischen Stroms gebildet. Die herkömmliche Batteriestromgrenze mit konstantem I_{RMS} weist den Verlauf einer Geraden auf, die durch den Ursprung des Koordinatensystems verläuft. Eine derartige Batteriestromgrenze hat den Nachteil, dass bei einer Batteriebelastung B zum Startzeitpunkt t₀ die Batteriestromgrenze leicht überschritten wird und somit einzelne elektrische Funktionen zum Schutze der Batterie 3 vom Batteriemanagementsystem 1 unnötig eingeschränkt werden. Dieser Nachteil ist durch die erfindungsgemäße adaptive Batteriestromgrenze A behoben.

Die Adaptive Batteriestromgrenze A weist zum Startzeitpunkt t₀ bereits einen größeren Wert als Null auf. Hierdurch wird einer grundsätzlich höheren Batteriestrombelastung B beim Starten des Kraftfahrzeugs 2 Rechnung getragen und somit ein anschließendes unnötiges Einschränken von elektrischen Funktionen vermieden. Bis zum Zeitpunkt t1 verlaufen die Adaptive Batteriestromgrenze A und die herkömmliche Batteriestromgrenze H etwa parallel. Zum ersten Zeitpunkt t₁ nimmt die adaptive Batteriestromgrenze A einen flachen Verlauf an, um eine übermäßige Belastung der Batterie 3 ab diesem Zeitpunkt zu vermeiden und einen Puffer für eine zukünftige Batteriestrombelastung B zu schaffen. Hierdurch wird beispielsweise einer vorhergesagten Stadtfahrt Rechnung getragen, da bei dieser voraussichtlich eine erhöhte Batteriestrombelastung E-Fahrt B1 vorliegen wird. Zum zweiten Zeitpunkt t₂ entspricht die adaptive Batteriestromgrenze A der herkömmlichen Batteriestromgrenze H und unterschreitet diese im Anschluss. Somit wird der Puffer für die zu erwartende zukünftige Batteriestrombelastung B erzeugt. Zum dritten Zeitpunkt t₃ wird der Verlauf der adaptiven Batteriestromgrenze A wieder steiler als der Verlauf der herkömmlichen Batteriestromgrenze H, um beispielsweise eine verstärktes elektromotorisches Fahren zu ermöglichen.

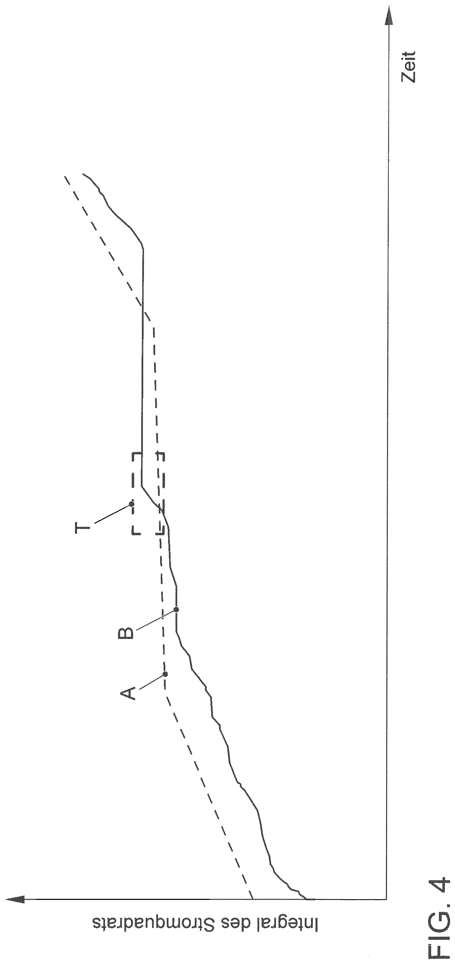

In Fig. 4 ist ein Verlauf des erfindungsgemäßen Verfahrens in einem Diagramm schematisch abgebildet. In dem Diagramm ist die adaptive Batteriestromgrenze A aus Fig. 3 dargestellt. Zunächst verläuft die aktuelle Batteriestrombelastung B des Kraftfahrzeugs 2 unterhalb der adaptiven Batteriestromgrenze A. Im Toleranzbereich T schneidet die Batteriestrombelastung B die adaptive Batteriestromgrenze A. Dieser Zustand ist zunächst unkritisch. Wie aus der Zeichnung hervorgeht, steigt die Batteriestrombelastung B im Toleranzbereich T zunächst wesentlich steiler als die adaptive Batteriestromgrenze A und macht dann einen Knick, wonach die Batteriestrombelastung einen sehr flachen weiteren Verlauf nimmt. Dieser Knick ist auf die Einschränkung von mindestens einer elektrischen Funktion des Kraftfahrzeugs 2 zurückzuführen. Diese mindestens eine elektrische Funktion wurde eingeschränkt, da der generierte Batteriebelastungsindikationswert einen vorbestimmten Belastungstoleranzwert übersteigt. Der Batteriebelastungsindikationswert ist beispielsweise als Differenz des Integrals der Batteriestrombelastung B und des Integrals der adaptiven Batteriestromgrenze A im Toleranzbereich T ermittelbar. Hinter dem Toleranzbereich T nähert sich die aktuelle Batteriestrombelastung B der adaptiven Batteriestromstärke B wieder an, so dass der Zuwachs des Batteriebelastungsindikationswerts geringer wird und ein Abnehmen des Batteriebelastungsindikationswerts bereits in Aussicht gestellt ist. Somit können die eingeschränkten elektrischen Funktionen in diesem Zeitabschnitt zumindest wieder teilweise zur Verfügung gestellt werden. Zu einem späteren Zeitpunkt unterschreitet die Batteriestrombelastung B wieder die adaptive Batteriestromgrenze A, so dass sich der Batteriebelastungsindikationswert dem Belastungstoleranzwert wieder annähert und diesen schließlich unterschreitet. In diesem Zeitabschnitt können die eingeschränkten elektrischen Funktionen ggf. wieder uneingeschränkt zur Verfügung gestellt werden. Zum stärkeren Abbau des Batteriebelastungsindikationswerts kann das wieder zur Verfügung Stellen der elektrischen Funktionen auch zeitverzögert erfolgen.

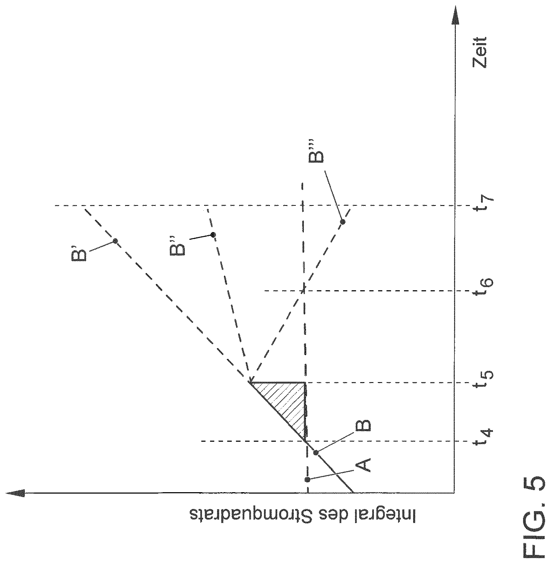

In Fig. 5 ist ein Toleranzbereich T in einem Diagramm schematisch dargestellt. In dem Toleranzbereich T überschreitet die Batteriestrombelastung B zum vierten Zeitpunkt t₄ die adaptive Batteriestromgrenze A. Ab dem fünften Zeitpunkt t₅ überschreitet der als schraffierte Fläche dargestellte Batteriebelastungsindikationswert den vorgegebenen Belastungstoleranzwert. Ohne Einschränkung von elektrischen Funktionen könnte die Batteriestrombelastung B gemäß der als erste prognostizierte Batteriestrombelastung B' bezeichneten Geraden weiter verlaufen. Die Größe der schraffierten Fläche würde mit fortschreitender Zeit weiter wie bisher zunehmen, und die Batterie 3 wäre einer besonders hohen Belastung ausgesetzt. Bei Einschränkung einer elektrischen Funktion des Kraftfahrzeugs 2, welche nur einen relativ geringen Strombedarf aufweist, könnte die Batteriestrombelastung B gemäß der als zweite prognostizierte Batteriestrombelastung B" bezeichneten Geraden verlaufen. Die Größe der schraffierten Fläche würde mit fortschreitender Zeit langsamer zunehmen, und die Batterie 3 wäre einer etwas geringeren aber weiterhin hohen Belastung ausgesetzt. Bei Einschränkung einer oder mehrerer elektrischer Funktionen des Kraftfahrzeugs 2, welche einen relativ großen Strombedarf aufweisen, könnte die Batteriestrombelastung B gemäß der als dritte prognostizierte Batteriestrombelastung B‴ bezeichneten Geraden verlaufen. Die Größe der schraffierten Fläche würde mit fortschreitender Zeit zunächst noch zunehmen und ab dem sechsten Zeitpunkt t₆, zu dem die dritte prognostizierte Batteriestrombelastung B‴ die adaptive Batteriestromgrenze B schneidet, wieder abnehmen. Zum siebten Zeitpunkt t₇ entspricht der Batteriebelastungsindikationswert wieder dem Belastungstoleranzwert. Daher kann beispielsweise um den siebten Zeitpunkt t₇ herum wieder eine vollständige oder zumindest teilweise Freigabe von elektrischen Funktionen erfolgen. Im Falle der dritten prognostizierten Batteriestrombelastung B" wäre die Batterie 3 einer geringeren Belastung ausgesetzt. Im Rahmen des erfindungsgemäßen Verfahrens zum Betreiben eines Batteriemanagementsystems eines Kraftfahrzeugs 2 kann beispielsweise der Belastungstoleranzwert angepasst werden, um eine Einschränkung elektrischer Funktionen zu beeinflussen. Ein größerer Belastungstoleranzwert hätte demnach eine höhere Verfügbarkeit der elektrischen Funktionen sowie eine höhere Batteriebelastung zur Folge. Demnach hätte ein geringerer Belastungstoleranzwert eine geringere Verfügbarkeit der elektrischen Funktionen sowie eine geringere Batteriebelastung zur Folge. Ebenso kann durch ein Verändern des Abstands zwischen dem fünften Zeitpunkt t₅ und dem siebten Zeitpunkts t₇ ein ähnlicher Effekt erzielt werden. Bei Verkürzen dieses Abstands würde eine Verfügbarkeit der elektrischen Funktionen eingeschränkt und die Batteriebelastung reduziert werden. Bei Vergrößern dieses Abstands würde eine Verfügbarkeit der elektrischen Funktionen verbessert und die Batteriebelastung dafür erhöht werden.

Fig. 6 zeigt ein erfindungsgemäßes Kraftfahrzeug 2 schematisch in einer Seitenansicht. Das Kraftfahrzeug 2 weist ein erfindungsgemäßes Batteriemanagementsystem 1 mit einer Kontrolleinheit 5 auf. Ferner weist das Kraftfahrzeug 2 eine Elektromaschine 4 sowie eine Batterie 3 auf.

### Bezugszeichenliste

- 1: Batteriemanagementsystem
- 2: Kraftfahrzeug
- 3: Batterie
- 4: Elektromaschine
- 5: Kontrolleinheit

- 100: erster Verfahrensschritt
- 200: zweiter Verfahrensschritt
- 300: dritter Verfahrensschritt
- 400: vierter Verfahrensschritt
- 500: fünfter Verfahrensschritt

- A: adaptive Batteriestromgrenze
- B: Batteriestrombelastung
- B1: Batteriestrombelastung E-Fahrt
- B2: Batteriestrombelastung Rekuperation
- B3: Batteriestrombelastung Lastpunktanhebung
- B4: Batteriestrombelastung Torque-Fill
- B5: Batteriestrombelastung Motorstart
- B6: Batteriestrombelastung Stillstand
- B': erste prognostizierte Batteriestrombelastung
- B": zweite prognostizierte Batteriestrombelastung
- B‴: dritte prognostizierte Batteriestrombelastung
- H: herkömmliche Batteriestromgrenze
- T: Toleranzbereich

- t₀: Startzeitpunkt
- t₁: erster Zeitpunkt
- t₂: zweiter Zeitpunkt
- t₃: dritter Zeitpunkt
- t₄: vierter Zeitpunkt
- t₅: fünfter Zeitpunkt
- t₆: sechster Zeitpunkt
- t₇: siebter Zeitpunkt

## Patentansprüche

1. Verfahren zum Betreiben eines Batteriemanagementsystems (1) eines Kraftfahrzeugs (2) mit einer Batterie (3), einer Elektromaschine (4) sowie einer Kontrolleinheit (5), aufweisend die folgenden Schritte:
- Erstellen einer Prädiktion einer potenziellen Batteriestrombelastung (B) der Batterie (3) mittels der Kontrolleinheit (5),
- Bestimmen einer adaptiven Batteriestromgrenze (A) der Batterie (3) mittels der Kontrolleinheit (5), wobei die adaptive Batteriestromgrenze (A) auf Basis der erstellten Prädiktion der potenziellen Batteriestrombelastung (B) bestimmt wird, wobei die adaptive Batteriestromgrenze (A) als Integralfunktion der Zeit bestimmt wird, so dass der Wert der adaptiven Batteriestromgrenze mit fortschreitender Zeit nicht abnehmen kann, wobei für einen Startzeitpunkt ein Wert gewählt wird, welcher größer als Null ist,
- Ermitteln einer aktuellen Batteriestrombelastung (B) der Batterie (3) mittels der Kontrolleinheit (5), wobei die aktuelle Batteriestrombelastung (B) durch Messen eines Batteriestroms sowie als Integralfunktion der Zeit ermittelt wird, so dass der Wert der aktuellen Batteriestrombelastung mit fortschreitender Zeit nicht abnehmen kann,
- Generieren eines Batteriebelastungsindikationswerts durch Vergleichen der Batteriestrombelastung (B) mit der adaptiven Batteriestromgrenze (A) mittels der Kontrolleinheit (5),
- Einschränken mindestens einer elektrischen Funktion des Kraftfahrzeugs (2) mittels der Kontrolleinheit (5), wenn der Batteriebelastungsindikationswert einen vorbestimmten Belastungstoleranzwert übersteigt,
wobei für eine Mehrzahl von elektrischen Funktionen des Kraftfahrzeugs (2) eine Einschränkungsgewichtung bereitgestellt wird, wobei das Einschränken der mindestens einen elektrischen Funktion In Abhängigkeit der Einschränkungsgewichtung erfolgt.

2. Verfahren nach Anspruch 1,
**dadurch gekennzeichnet,**
**dass** das Erstellen der Prädiktion der potenziellen Batteriestrombelastung (B) auf Basis von gewählten Fahrrouten eines Navigationssystems und/oder auf Basis von Fahrrouten einer Streckenhistorie des Kraftfahrzeugs (2) erfolgt.

3. Verfahren nach Anspruch 1 oder 2,
**dadurch gekennzeichnet,**
**dass** zum Erstellen der Prädiktion ein Fahrerprofil eines aktuellen Fahrers des Kraftfahrzeugs (2) berücksichtigt wird.

4. Verfahren nach einem der vorangegangenen Ansprüche,
**dadurch gekennzeichnet,**
**dass** beim Bestimmen der adaptiven Batteriestromgrenze (A) eine vom Fahrer gewählte Batteriebeanspruchungsvorgabe berücksichtigt wird.

5. Verfahren nach einem der vorangegangenen Ansprüche,
**dadurch gekennzeichnet,**
**dass** die Batteriestrombelastung (B) über ein Integral des Quadrats einer ermittelten Batteriestromstärke ermittelt wird.

6. Verfahren nach einem der vorangegangenen Ansprüche,
**dadurch gekennzeichnet,**
**dass** die Einschränkungsgewichtung unter Berücksichtigung von fahrerspezifischen Präferenzen erstellt wird.

7. Verfahren nach einem der vorangegangenen Ansprüche,
**dadurch gekennzeichnet,**
**dass** mindestens zwei elektrische Funktionen des Kraftfahrzeugs (2) mittels der Kontrolleinheit (5) zumindest teilweise eingeschränkt werden, wenn der Batteriebelastungsindikationswert einen vorbestimmten Belastungstoleranzwert übersteigt.

8. Batteriemanagementsystem (1) für ein Kraftfahrzeug (2) zum Kontrollieren eines Betriebs einer Batterie (3) des Kraftfahrzeugs (2), aufweisend eine Kontrolleinheit (5),
**dadurch gekennzeichnet,**
**dass** das Batteriemanagementsystem (1) zur Durchführung eines Verfahrens nach einem der vorangegangenen Ansprüche ausgebildet ist.

9. Kraftfahrzeug (2), aufweisend eine Batterie (3) und eine Elektromaschine (4),
**dadurch gekennzeichnet,**
**dass** das Kraftfahrzeug (2) ein Batteriemanagementsystem (1) nach Anspruch 8 aufweist.

## Claims

1. Method for operating a battery management system (1) of a motor vehicle (2) having a battery (3), an electric machine (4) and a control unit (5), the method having the following steps:
- establishing a prediction of a potential battery current load (B) of the battery (3) using the control unit (5),
- determining an adaptive battery current limit (A) of the battery (3) using the control unit (5), wherein the adaptive battery current limit (A) is determined on the basis of the established prediction of the potential battery current load (B),
wherein the adaptive battery current limit (A) is determined as an integral function of the time, such that the value of the adaptive battery current limit cannot decrease as time progresses,
wherein a value greater than zero is selected for a starting time,
- identifying a present battery current load (B) of the battery (3) using the control unit (5), wherein the present battery current load (B) is identified by measuring a battery current and as an integral function of the time, such that the value of the present battery current load cannot decrease as time progresses,
- generating a battery load indication value by comparing the battery current load (B) with the adaptive battery current limit (A) using the control unit (5),
- restricting at least one electrical function of the motor vehicle (2) using the control unit (5) if the battery load indication value exceeds a predetermined load tolerance value,
wherein a restriction weighting is provided for a plurality of electrical functions of the motor vehicle (2), wherein the at least one electrical function is restricted based on the restriction weighting.

2. Method according to Claim 1,
**characterized in that**
the prediction of the potential battery current load (B) is established based on selected driving routes of a navigation system and/or based on driving routes of a route history of the motor vehicle (2).

3. Method according to Claim 1 or 2,
**characterized in that**
a driver profile of a present driver of the motor vehicle (2) is taken into account in the establishment of the prediction.

4. Method according to one of the preceding claims,
**characterized in that**
a battery load specification selected by the driver is taken into account when determining the adaptive battery current limit (A).

5. Method according to one of the preceding claims,
**characterized in that**
the battery current load (B) is identified by means of an integral of the square of an identified battery current intensity.

6. Method according to one of the preceding claims,
**characterized in that**
the restriction weighting is established taking into account driver-specific preferences.

7. Method according to one of the preceding claims,
**characterized in that**
at least two electrical functions of the motor vehicle (2) are at least partly restricted using the control unit (5) when the battery load indication value exceeds a predetermined load tolerance value.

8. Battery management system (1) for a motor vehicle (2) for controlling the operation of a battery (3) of the motor vehicle (2), having a control unit (5),
**characterized in that**
the battery management system (1) is designed to carry out a method according to one the preceding claims.

9. Motor vehicle (2), having a battery (3) and an electric machine (4),
**characterized in that**
the motor vehicle (2) has a battery management system (1) according to Claim 8.

## Revendications

1. Procédé pour faire fonctionner un système de gestion de batterie (1) d'un véhicule automobile (2) comprenant une batterie (3), une machine électrique (4) ainsi qu'une unité de contrôle (5), comprenant les étapes suivantes :
- établissement d'une prédiction d'une charge de courant de batterie (B) potentielle de la batterie (3) au moyen de l'unité de contrôle (5),
- détermination d'une limite de courant de batterie (A) adaptative de la batterie (3) au moyen de l'unité de contrôle (5), la limite de courant de batterie (A) adaptative étant déterminée sur la base de la prédiction établie de la charge de courant de batterie (B) potentielle, la limite de courant de batterie (A) adaptative étant déterminée en tant que fonction intégrale du temps, de sorte que la valeur de la limite de courant de batterie adaptative ne peut pas diminuer avec le passage du temps, une valeur qui est supérieure à zéro étant sélectionnée pour un instant de départ,
- identification d'une charge de courant de batterie (B) actuelle de la batterie (3) au moyen de l'unité de contrôle (5), la charge de courant de batterie (B) actuelle étant identifiée par mesure d'un courant de batterie ainsi qu'en tant que fonction intégrale du temps, de sorte que la valeur de la charge de courant de batterie actuelle ne peut pas diminuer avec le passage du temps,
- génération d'une valeur d'indication de charge de batterie par comparaison de la charge de courant de batterie (B) avec la limite de courant de batterie (A) adaptative au moyen de l'unité de contrôle (5),
- limitation d'au moins une fonction électrique du véhicule automobile (2) au moyen de l'unité de contrôle (5) lorsque la valeur d'indication de charge de batterie dépasse une valeur de tolérance de charge prédéterminée, une pondération de limitation étant fournie pour une pluralité de fonctions électriques du véhicule automobile (2), la limitation de l'au moins une fonction électrique s'effectuant en fonction de la pondération de limitation.

2. Procédé selon la revendication 1, **caractérisé en ce que** l'établissement de la prédiction de la charge de courant de batterie (B) potentielle est effectué sur la base d'itinéraires de déplacement sélectionnés d'un système de navigation et/ou sur la base d'itinéraires de déplacement d'un historique de parcours du véhicule automobile (2).

3. Procédé selon la revendication 1, **caractérisé en ce qu'**un profil de conducteur d'un conducteur actuel du véhicule automobile (2) est pris en considération pour l'établissement de la prédiction.

4. Procédé selon l'une des revendications précédentes, **caractérisé en ce qu'**une consigne de sollicitation de batterie sélectionnée par le conducteur est prise en considération lors de la détermination de la limite de courant de batterie (A) adaptative.

5. Procédé selon l'une des revendications précédentes, **caractérisé en ce que** la charge de courant de batterie (B) potentielle est identifiée par le biais d'une intégrale du carré d'une intensité de courant de batterie identifiée.

6. Procédé selon l'une des revendications précédentes, **caractérisé en ce que** la pondération de limitation est établie en prenant en considération des préférences spécifiques au conducteur.

7. Procédé selon l'une des revendications précédentes, **caractérisé en ce qu'**au moins deux fonctions électriques du véhicule automobile (2) sont limitées au moins partiellement au moyen de l'unité de contrôle (5) lorsque la valeur d'indication de charge de batterie dépasse une valeur de tolérance de charge prédéterminée.

8. Système de gestion de batterie (1) pour un véhicule automobile (2) destiné à contrôler un fonctionnement d'une batterie (3) du véhicule automobile (2), possédant une unité de contrôle (5), **caractérisé en ce que** le système de gestion de batterie (1) est configuré pour mettre en oeuvre un procédé selon l'une des revendications précédentes.

9. Véhicule automobile (2), possédant une batterie (3) et une machine électrique (4), **caractérisé en ce que** le véhicule automobile (2) possède un système de gestion de batterie (1) selon la revendication 8.
